(19) Europäisches Patentamt

European Patent Office

Office européen des brevets

(11) **EP 1 724 950 A2**

(12) **DEMANDE DE BREVET EUROPEEN**

(43) Date de publication:
**22.11.2006 Bulletin 2006/47**

(51) Int Cl.:
***H04B 7/26*** (2006.01)

(21) Numéro de dépôt: **06018182.3**

(22) Date de dépôt: **03.10.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **03.10.2000 FR 0012765**

(62) Numéro(s) de document de la (des) demande(s) initiale(s) en application de l'article 76 CBE:
**03076165.4 / 1 333 601**
**01402553.0 / 1 195 924**

(71) Demandeur: **Mitsubishi Electric Information Technology Centre Europe B.V.**
**1119 NS Schiphol Rijk (NL)**

(72) Inventeurs:
- **Rudolf, Marian**
  **CS 10806**
  **35708 Rennes Cedex 7 (FR)**
- **Jechoux, Bruno**
  **CS 10806**
  **35708 Rennes Cedex 7 (FR)**

(74) Mandataire: **Maillet, Alain**
  **Cabinet le Guen & Maillet,**
  **5, Place Newquay,**
  **B.P. 70250**
  **35802 Dinard Cedex (FR)**

Remarques:
Cette demande a été déposée le 31 - 08 - 2006 comme demande divisionnaire de la demande mentionnée sous le code INID 62.

(54) **Méthode de synchronisation de stations de base**

(57) La présente invention concerne une station de base d'un système de télécommunication radiomobile, caractérisée en ce que ladite station de base transmet un signal de synchronisation comprenant un premier code de Golay et un second code de Golay qui suit ledit premier code de Golay, ledit second code de Golay étant complémentaire du premier code de Golay et connecté audit premier code de Golay par au moins une extension périodique du premier code de Golay et une extension périodique du second code de Golay, ladite extension périodique dudit premier code de Golay étant une réplique tronquée du premier code de Golay et ladite extension périodique dudit second code de Golay étant une réplique tronquée du second code de Golay.

Ladite invention concerne également un système de télécommunication par radio ainsi qu'une méthode de synchronisation pour synchroniser des stations de base d'un système de télécommunication par radio.

FIG.2a

EP 1 724 950 A2

**EP 1 724 950 A2**

**Description**

La présente invention concerne une méthode de synchronisation de stations de base dans un système de télécommunication radiomobile. Plus particulièrement, la présente invention concerne une méthode de synchronisation de stations de base pour un système de télécommunication du type duplex à division de temps (TDD). Ledit système de télécommunication est par exemple le système en cours de normalisation, communément appelé 3GPP W-CDMA TDD.

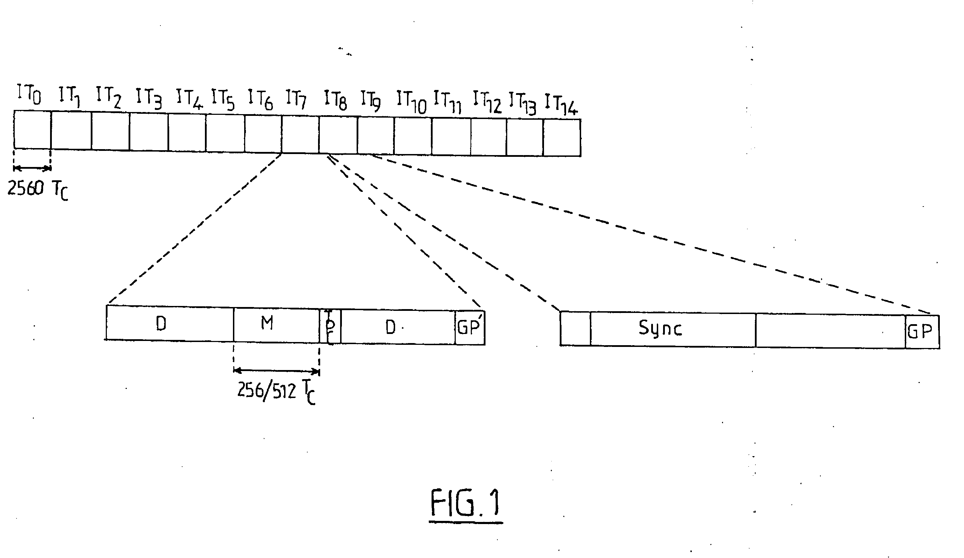

On a représenté en Fig. 1 une trame radio d'un tel système de télécommunication. Elle est constituée de quinze intervalles de temps de transmission (time slots) dont certains, par exemple, les intervalles $IT_0$, $IT_1$, $IT_2$, $IT_5$, $IT_6$ et $IT_8$, sont destinés au transport des données (au sens large du terme) dans le sens descendant (station de base vers terminal mobile) alors que d'autres, les intervalles $IT_3$, $IT_4$, $IT_7$, $IT_9$, $IT_{10}$, $IT_{11}$, $IT_{12}$, $IT_{13}$ et $IT_{14}$, sont destinés au transport des données dans le sens montant (station mobile vers station de base). Lors d'un intervalle de transmission, les données (D) sont transmises sous forme d'une séquence de symboles. L'intervalle inclut également un midambule (M) comprenant des symboles pilotes permettant l'estimation du canal, un mot de contrôle de puissance (TPC) et un intervalle de garde (GP'). Dans un tel système, plusieurs terminaux mobiles ou stations de base peuvent émettre ou recevoir des données dans un même intervalle de temps. Les liaisons sont différenciées par multiplexage à division de code (Code Division Multiple Access = CDMA). Les symboles transmis par ou pour les différents usagers sont étalés spectralement, approximativement à une fréquence « chip » $1/T_c$ où Tc est la période de transmission élémentaire.

Du fait qu'une même fréquence puisse être utilisée aussi bien dans le sens montant que dans le sens descendant, il est impératif d'assurer la synchronisation des stations de base- En effet, si tel n'était pas le cas, un premier terminal mobile émettant à forte puissance dans un canal montant pourrait interférer avec un second terminal mobile, proche du premier, recevant des données sur un canal descendant. La contrainte de synchronisation entre stations de base voisines est de l'ordre de quelques microsecondes (5 environ) dans le système W-CDMA TDD.

Pour effectuer la synchronisation entre stations de base, plusieurs méthodes ont été proposées dans l'état de la technique. Selon une première méthode, la synchronisation est obtenue grâce à des récepteurs GPS équipant les stations de base. Selon une seconde méthode, on procède tout d'abord dans une phase initiale, par exemple lors de la mise en place du réseau ou d'une nouvelle station de base, à une synchronisation grossière (de l'ordre de quelques dizaines de ms, c'est-à-dire de quelques dizaines de milliers de « chips »). Cette synchronisation grossière initiale est assurée par le réseau, plus précisément par le contrôleur d'accès radio (RNC) contrôlant plusieurs stations de base (encore dénommées « nodes B ») voisines. Une synchronisation fine est ensuite effectuée régulièrement par l'interface radio entre stations de base voisines. Cette synchronisation fine a pour but notamment de corriger la dérive des horloges de séquencement entre stations de base voisines. Pour ce faire, certains intervalles de temps sont réservés à la transmission et à la réception d'un signal de synchronisation. Un intervalle de transmission dédié à la synchronisation comprend essentiellement une séquence de synchronisation (Sync) et une période de garde (GP). La synchronisation est obtenue, d'une manière connue en soi, par corrélation de la séquence reçue avec une séquence réplique de celle transmise. La corrélation est effectuée sur une fenêtre temporelle de longueur donnée par la marge de précision de la synchronisation grossière. Ainsi, lorsqu'une station de base reçoit une séquence de synchronisation et détecte un pic de corrélation dans cette fenêtre, elle peut synchroniser son séquencement avec celui des stations de base avoisinantes.

La séquence de synchronisation généralement utilisée est longue (plusieurs milliers de « chips ») afin d'obtenir une bonne précision de corrélation pour une puissance par symbole acceptable. La période de garde doit être supérieure au temps de propagation d'une station de base à une station voisine de manière à éviter, à la réception, un empiètement de la séquence de synchronisation sur un intervalle de temps voisin. La distance entre deux stations de base étant plus élevée que le rayon d'une cellule, la période de garde (GP) est choisie plus grande que la période de garde normale (GP'). La période de garde (GP) doit également tenir compte de la dérive des horloges de trames.

La séquence de synchronisation est choisie pour avoir de bonnes propriétés d'auto-corrélation, à savoir un pic d'auto-corrélation très prononcé. Généralement, les séquences de synchronisation utilisées sont obtenues à partir de polynômes primitifs sur GF(2), corps de Galois de cardinal 2. Une telle séquence présente une longueur $L$ qui une puissance $N^{ème}$ de 2 moins 1, soit $L = 2^N - 1$. C'est le cas notamment pour les séquences dites de Gold qui ont été proposées dans le rapport TSGR1#15(00)0946 intitulé « Séquences for the cell sync burst » du Groupe de Travail TSG-RAN de l'ETSI pour synchroniser des stations de base voisines.

Les séquences de Gold possèdent de bonnes propriétés d'autocorrélation périodique (la corrélation d'une séquence constituée par la répétition d'une séquence de Gold avec une réplique de la séquence de cette dernière ne présente pas de pics secondaires importants). En revanche, ces séquences ne présentent malheureusement pas d'aussi bonnes propriétés d'autocorrélation apériodique (corrélation d'une séquence de Gold isolée avec une réplique). Qui plus est, le corrélateur généralement utilisé opère dans le domaine temporel sous la forme d'un filtre adapté FIR classique présentant une complexité en O(L) qui peut être très élevée. En outre, le choix des longueurs de telles séquences est réduit, puisqu'elles ne peuvent prendre, comme on l'a vu, que des valeurs $2^N - 1$ et une troncation conduirait à une perte sensible des propriétés d'autocorrélation.

Un but de la présente invention est de proposer une méthode de synchronisation de stations de base voisines grâce à la transmission d'une séquence de synchronisation présentant de très bonnes propriétés de corrélation.

Un but secondaire de l'invention est d'offrir un grand choix de longueurs de séquences de synchronisation possibles, et ce, pour un faible degré de complexité du corrélateur.

La présente invention est définie par une méthode de synchronisation de stations de base dans un système de télécommunication radiomobile, selon laquelle une première station de base transmet une séquence de synchronisation comprenant une première séquence suivie d'une seconde séquence, lesdites première et seconde séquences formant un couple de séquences complémentaires et en ce qu'au moins une seconde station de base effectue la corrélation de ladite séquence de synchronisation avec une réplique de la première séquence et une réplique de la seconde séquence, les résultats de corrélation étant ensuite sommés pour donner un signal de corrélation fournissant une information de synchronisation. La première séquence est séparée de la seconde séquence par un intervalle de séparation de longueur prédéterminée (2GP, 2E), de sorte que le signal de corrélation présente un pic de corrélation isolé dans une fenêtre temporelle.

Avantageusement, les première et seconde séquences sont des séquences complémentaires de Golay.

Selon un premier mode de réalisation, ledit intervalle de séparation est obtenu en prévoyant des intervalles de garde autour de la première et de la seconde séquences.

Selon un second mode de réalisation, ledit intervalle de séparation est obtenu en prévoyant une extension périodique de la première séquence suivie d'une extension périodique de la seconde séquence.

Selon un troisième mode de réalisation, la première séquence est générée au moyen d'une première séquence de Golay et d'une première séquence auxiliaire en multipliant successivement ladite première séquence de Golay par les bits de la première séquence auxiliaire.

De même, la seconde séquence peut être générée au moyen d'une seconde séquence de Golay, complémentaire de ladite première séquence de Golay, et d'une seconde séquence auxiliaire en multipliant successivement ladite seconde séquence de Golay par les bits de la première seconde séquence auxiliaire.

Avantageusement, la première séquence auxiliaire et la seconde séquence auxiliaire sont des séquences complémentaires de Golay.

Selon une variante de réalisation, la corrélation est effectuée par un filtrage en treillis.

Les caractéristiques de l'invention mentionnées ci-dessus, ainsi que d'autres, apparaîtront plus clairement à la lecture de la description suivante faite en relation avec les figures jointes, parmi lesquelles :

La Fig. 1 représente de manière schématique une trame d'émission d'un système de transmission du type W-CDMA TDD ;
La Fig. 2A représente un premier mode de réalisation de l'invention ;
La Fig. 2B représente un second mode de réalisation de l'invention ;
La Fig. 2C représente un troisième mode de réalisation de l'invention ;
La Fig. 3 représente un corrélateur utile au troisième mode de réalisation de l'invention.

L'idée générale à la base de l'invention est d'utiliser, pour la synchronisation de stations de base voisines, un couple de codes complémentaires, par exemple de codes complémentaires polyphases, plus particulièrement un couple de codes complémentaires de Golay. Les codes complémentaires, connus en tant que tels, ont pour propriété remarquable que la somme de leurs fonctions d'autocorrélation apériodiques est une fonction de Dirac. Autrement dit, si l'on note (A,B) un couple de tels codes complémentaires, on a $\varphi AA(m)+\varphi BB(m)=\delta(m)$ où m est l'indice de temps, $\delta$ le symbole de Kronecker et $\varphi$ la fonction d'autocorrélation apériodique.

Dans la suite de la description, il sera essentiellement fait mention de codes complémentaires de Golay. L'invention s'applique cependant aux codes complémentaires en général.

D'autre part, comme décrit notamment dans l'article de S.Z. Budisin, intitulé « Efficient pulse compressor for Golay complementary sequences » et publié dans Electronics Letters, Vol. 27, N° 3, pages 219-220 en Janvier 1991, le corrélateur peut être réalisé grâce à un filtre en treillis présentant une complexité en O(logL) et non en O(L) comme dans un filtre adapté FIR classique. Ce filtre en treillis est encore appelé filtre EGC pour Efficient Golay Correlator. Un exemple de réalisation de filtre EGC est donné l'article de B.M. Popovic intitulé « Efficient Golay Correlator », publié dans IEEE Electronics Letters, Vol. 35, N°17, Janvier 1999.

En outre, pour une longueur autorisée donnée, il existe plusieurs séquences de Golay possibles. En effet, les séquences de Golay étant générées par des codes générateurs, on peut montrer que deux codes générateurs distincts et de même longueur génèrent des séquences de Golay également distinctes et de même longueur. Ces séquences possèdent de bonnes propriétés d'inter-corrélation (c'est-à-dire de faibles valeurs d'inter-corrélation), permettant par exemple à des groupes de stations de base d'utiliser des codes distincts ou encore d'effectuer une synchronisation des stations de base en différents instants de leur séquencement.

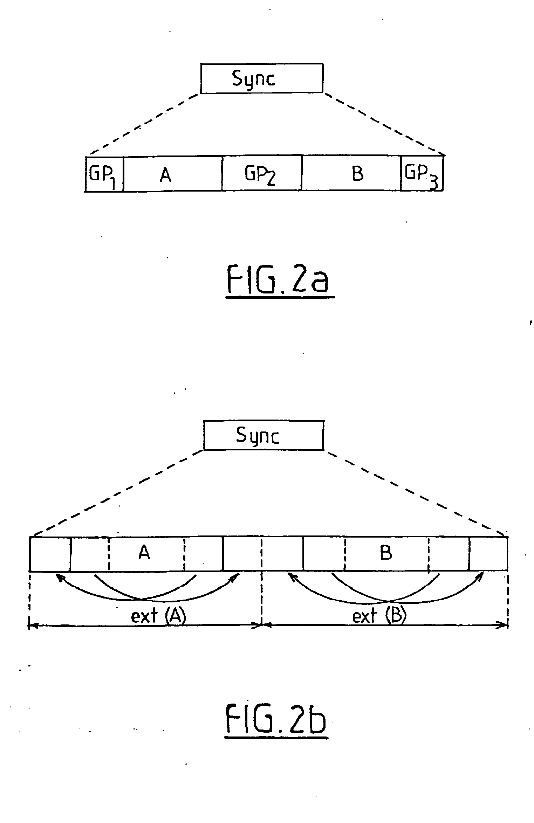

Un premier mode de réalisation de l'invention est illustré en Fig. 2A. Selon ce mode de réalisation, une séquence de synchronisation est constituée de deux séquences complémentaires de Golay A et B multiplexées dans le temps, chaque séquence étant précédée et suivie par un intervalle de garde, comme décrit dans la demande française FR-A-9916851 déposée le 30.12.1999 au nom de la demanderesse. Cette séquence est transmise par une station de base et est reçue par une station de base voisine. A la réception, la séquence de synchronisation est corrélée avec une réplique de la séquence A et une réplique de la séquence B, le résultat de corrélation avec la séquence A est retardé de manière à être temporellement aligné avec le résultat de corrélation avec la séquence B avant qu'ils soient sommés, le pic de Dirac étant obtenu lorsque les répliques de A et B sont alignées avec les séquences correspondantes. La présence de l'intervalle de garde $GP_2$ assure que, lors de la corrélation, les séquences A et B ne chevauchent pas les répliques complémentaires correspondantes, à savoir B et A respectivement, dans une fenêtre temporelle centrée sur la position d'alignement temporel. Ainsi, des pics de corrélation secondaires pouvant résulter de l'intercorrélation entre séquences et répliques complémentaires sont rejetés hors de cette fenêtre. Plus précisément, si $GP_2 = 2.GP_3 = 2.GP_1 = 2.GP$, la somme des deux résultats de corrélation présente un pic de Dirac isolé dans une fenêtre de largeur 2.GP autour de la position d'alignement temporel. Les corrélations sont avantageusement effectuées par des corrélateurs EGC, tels que mentionnés plus haut.

Un second mode de réalisation de l'invention est illustré en Fig. 2B. Selon ce mode de réalisation, une séquence de synchronisation est constituée de deux séquences complémentaires de Golay multiplexées dans le temps, chaque séquence étant précédée et suivie par une extension périodique, comme expliqué dans la demande française intitulée « Séquence d'estimation de canal et procédé d'estimation de canal de transmission utilisant une telle séquence » déposée au nom de la demanderesse. L'extension périodique d'une séquence donnée est une troncation de la séquence périodique obtenue par répétition de ladite séquence. Pour ce faire, il suffit de concaténer à la séquence à étendre un préfixe correspondant à la fin et un suffixe correspondant au début de ladite séquence. On a schématiquement indiqué en Fig.2B, la concaténation de préfixes et de suffixes pour deux séquences complémentaires de Golay, A et B. La séquence de synchronisation est constituée elle-même des deux séquences ainsi étendues ext(A) et ext(B). Les extensions périodiques produisent le même avantage que l'intervalle de garde $GP_2$, à savoir l'absence de pics de corrélation secondaires autour du pic de Dirac dans une certaine fenêtre temporelle. Plus précisément, si les suffixes et préfixes sont de taille identique et égale à E, la somme des résultats de corrélation présentera un pic de Dirac isolé dans une fenêtre de largeur 2.E autour de la position d'alignement temporel. Ceci se comprend aisément si l'on considère l'hypothèse où la séquence de synchronisation comprend des séquences A et B complètement périodisées. La corrélation avec des répliques de A et B produit alors une série de pics de Dirac de période L. Une extension périodique d'ampleur E revient à tronquer cette série par une fenêtre de largeur 2.E autour du pic d'alignement temporel. L'avantage de ce mode de réalisation par rapport au précédent est de ne pas provoquer de brusques variations de puissance de signal entre les séquences A et B, au niveau de l'amplificateur de l'émetteur. Ces variations brutales peuvent générer des fréquences élevées, de l'interférence intersymbole et par suite dégrader, à la réception, les résultats de corrélation.

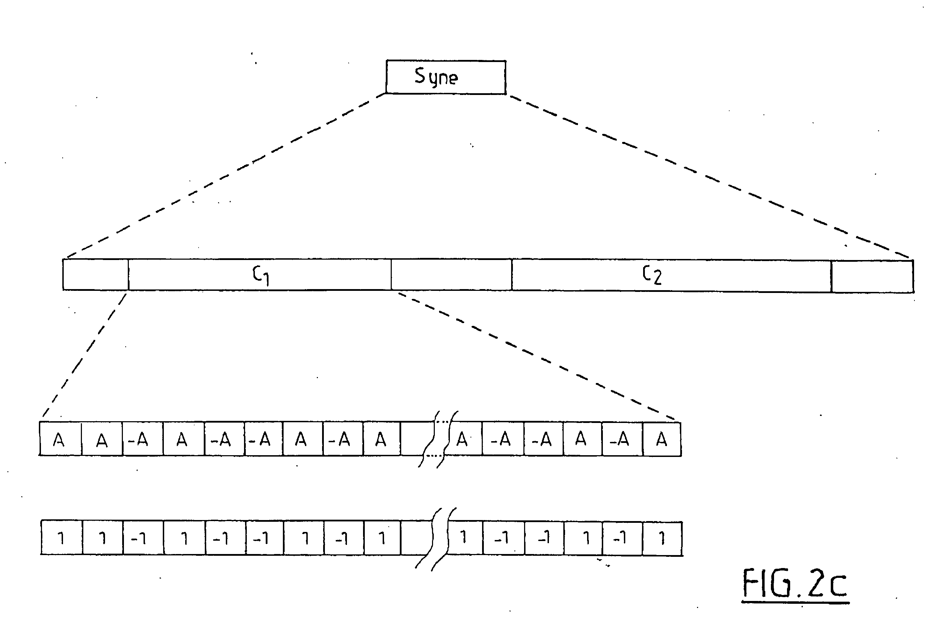

Un troisième mode de réalisation de l'invention est illustré en Fig. 2C. Selon ce mode de réalisation, on génère, à partir d'une séquence de Golay A ou B et d'une séquence auxiliaire X, une séquence composite, selon le mode de construction des séquences hiérarchiques. Plus précisément, on multiplie successivement le premier bit de la séquence auxiliaire X par tous les bits de la séquence A, puis le second bit de la seconde séquence par tous les bits de la séquence A, ainsi de suite et l'on concatène les séquences obtenues. Nous noterons par la suite A*X une telle séquence composite, A étant la séquence de base et X la séquence auxiliaire génératrice. Les séquences de Golay complémentaires A et B peuvent être ainsi multipliées par des séquences auxiliaires X,Y, identiques ou distinctes, ces dernières pouvant d'ailleurs être elles-mêmes des séquences de Golay.

Soient A*X et B*X des séquences composites obtenues à partir d'une paire A , B de séquences complémentaires de Golay, de longueur L, étendues par des préfixes et suffixes de taille E. A*X et B*X sont multiplexées dans le temps et séparées par un intervalle W. Le signal reçu est corrélé avec la séquence A d'une part et avec la séquence B d'autre part. Le résultat de la première corrélation est retardé de (L+2E)+W et est sommé avec le résultat de la seconde corrélation. La somme obtenue est une séquence R comportant une série de pics de Dirac de période L'=L+2E modulés par les valeurs $x_0$, $x_1$,..,$x_K$ où K est la longueur de la séquence X, chaque pic étant entouré d'une fenêtre de largeur 2.E ne comportant que des zéros. La séquence R est ensuite soumise à un filtrage par un filtre linéaire de réponse :

$$H(z) = x_0 + x_1.z^{-L'} + \ldots + x_K.z^{-K.L'}$$

La séquence R filtrée comporte un pic de Dirac de hauteur 2.K.L au milieu d'une fenêtre nulle de largeur 2.E ce qui permet de le détecter facilement. En outre, la séquence totale constituée des séquences A*X et B*X multiplexées dans le temps est de longueur totale 2.(L+2.E).K+W, ce qui offre un large choix de longueurs de séquences autorisées.

Selon une autre variante de réalisation, on génère quatre séquences composites A*X, A*Y, B*X, B*Y où A, B forment une première paire de séquences complémentaires de Golay étendues ou non et X, Y forment une seconde paire de séquences complémentaires de Golay servant de séquences auxiliaires génératrices.

Les séquences composites sont multiplexées dans le temps et séparées par des intervalles que nous supposerons égaux et de largeur W. Les séquences A et B sont de longueur L'=L+2.E où L est la longueur de la séquence de base et E la taille de l'extension, les séquences X, Y étant de longueur K. La longueur de la séquence totale est donc de 4(L+2E)K+3W, ce qui offre un large choix de longueurs de séquences autorisées.

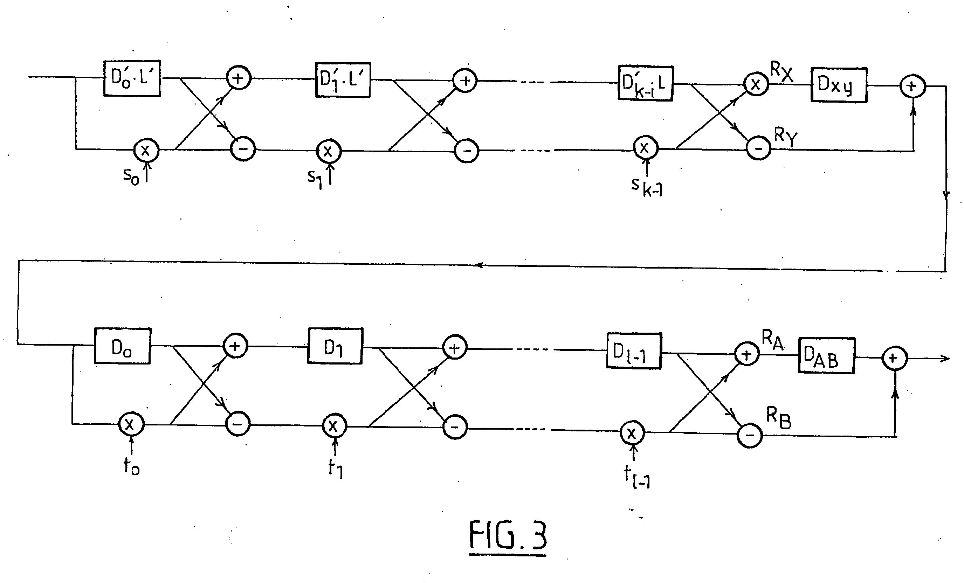

La présente variante tire parti du fait que l'on dispose de L' paires de séquences complémentaires (X,Y) sous la forme de sous-séquences $S_m$ et $S'_m$ avec $S_m(n)=(A*X)_{n.L'+m}$ et $S'_m(n)=(B*X)_{n.L'+m}$, m=0,..,L'-1 obtenues par décimation de la séquence totale initiale. Au lieu d'effectuer une corrélation avec un corrélateur EGC, on utilise un corrélateur « hiérarchique », le premier étage du corrélateur fonction EGC modifié tel que représenté en Fig. 3.

On supposera que la paire de séquences X et Y a été générée classiquement par une séquence élémentaire $s_0,..,s_{k-1}$, où $K=2^k-1$ et des retards $D'_0,D'_1,...,D'_{k-1}$ avec $D'_i=2^{Pi}$ où $(P_0,P_1,..,P_{k-1})$ est une permutation sur l'ensemble $(0,1,...,k-1)$, de la manière récursive suivante :

$$X_0(i)=\delta(i) \; ; \; Y_0(i)=\delta(i);$$

$$X_n(i)= X_{n-1}(i)+s_{n-1}.X_{n-1}(i-D'_i) \; ; \; Y_n(i)= Y_{n-1}(i)-s_{n-1}.Y_{n-1}(i-D'_i);$$

De même, on supposera que la paire de séquences A,B a été générée par la séquence élémentaire $t_0,...,t_{1-1}$, où $L=2^1-1$ et des retards $D_0,D_1,...,D_{k-1}$ avec $D_i=2^{Pi}$ où $(P_0,P_1,...,P_{1-1})$ est une permutation sur l'ensemble $(0,1,...,1-1)$.

Le premier étage de corrélation effectue une corrélation avec la paire de séquences X, Y, mais diffère d'un corrélateur EGC classique en ce que les retards ont été multipliés par un facteur L' pour tenir compte de la dispersion des échantillons. Les deux résultats de corrélation sont sommés après alignement temporel par un retard $D_{XY}$ , le retard $D_{XY}$ séparant les séquences A*X et A*Y, d'une part, et les séquences B*X et B*Y, d'autre part. Le second étage du corrélateur effectue la corrélation avec la paire de séquences A, B et est classique en lui-même. Les résultats de corrélation sont alignés temporellement par un retard $D_{AB}$ et sommés, le retard $D_{AB}$ correspondant à l'écart temporel entre les séquences A*X et B*X, d'une part, et les séquences A*Y et B*Y, d'autre part.

Le corrélateur ainsi constitué opère tout d'abord une corrélation grossière avec un pas L' puis une corrélation fine au pas d'échantillonnage. Sa complexité est faible puisque le nombre d'opérations effectuées est en O(log(K)+log(L)).

Bien que l'exemple décrit ci-dessus possède seulement deux niveaux de séquences et deux niveaux de corrélation, l'invention se généralise de manière immédiate à un nombre quelconque de niveaux de séquences et d'étages correspondants du corrélateur hiérarchique.

## Revendications

**1.** Station de base d'un système de télécommunication radiomobile, **caractérisé en ce que** :

ladite station de base transmet un signal de synchronisation comprenant
un premier code de Golay et un second code de Golay qui suit ledit premier code de Golay,
ledit second code de Golay étant complémentaire du premier code de Golay et connecté audit premier code de Golay par au moins une extension périodique du premier code de Golay et une extension périodique du second code de Golay,
ladite extension périodique dudit premier code de Golay étant une réplique tronquée du premier code de Golay et ladite extension périodique dudit second code de Golay étant une réplique tronquée du second code de Golay.

**2.** Système de télécommunication par radio, **caractérisé en ce qu'**il comprend :

- une première station de base transmettant un signal de synchronisation comprenant un premier code de Golay et un second code de Golay qui suit le premier code de Golay,
ledit second code de Golay étant complémentaire dudit premier code de Golay et connecté audit premier code de Golay par au moins une extension périodique dudit premier code de Golay et une extension périodique dudit second code de Golay,
ladite extension périodique du premier code de Golay étant une réplique tronquée du premier code de Golay et ladite extension dudit second code de Golay étant une réplique tronquée du second code de Golay, et

- une seconde station de base corrélant ledit signal de synchronisation pour produire un signal de corrélation afin de fournir une information de synchronisation.

3. Méthode de synchronisation pour synchroniser des stations de base dans un système de télécommunication par radio, **caractérisée en ce qu'**elle comprend :

- une étape de transmission d'un signal de synchronisation qui comprend
un premier code de Golay et un second code de Golay qui suit le premier code de Golay,
ledit second code de Golay étant complémentaire dudit premier code de Golay et connecté audit premier code de Golay par au moins une extension périodique dudit premier code de Golay et une extension périodique dudit second code de Golay,
ladite extension périodique dudit premier code de Golay étant une réplique tronquée dudit premier code de Golay et ladite extension périodique dudit second code de Golay étant une réplique tronquée dudit second code de Golay, et
- une étape de corrélation dudit signal de synchronisation afin de produire un signal de corrélation pour une information de synchronisation.

EP 1 724 950 A2

$IT_0$ $IT_1$ $IT_2$ $IT_3$ $IT_4$ $IT_5$ $IT_6$ $IT_7$ $IT_8$ $IT_9$ $IT_{10}$ $IT_{11}$ $IT_{12}$ $IT_{13}$ $IT_{14}$

2560 $T_C$

| D | M | P | D. | GP' |

256/512 $T_C$

| | Sync | | GP |

FIG.1

EP 1 724 950 A2

FIG.2a

FIG.2b

Sync

$C_1$

$C_2$

| A | A | -A | A | -A | -A | A | -A | A |   | A | -A | -A | A | -A | A |

| 1 | 1 | -1 | 1 | -1 | -1 | 1 | -1 | 1 |   | 1 | -1 | -1 | 1 | -1 | 1 |

FIG.2c

$D'_0 \cdot L'$  $+$  $D'_1 \cdot L'$  $+$  $D'_{k-i} \cdot L$  $\times$  $R_X$  $D_{xy}$  $+$

$\times$  $-$  $\times$  $-$  $\times$  $-$  $R_Y$

$s_0$  $s_1$  $s_{k-1}$

$D_0$  $+$  $D_1$  $+$  $D_{l-1}$  $+$  $R_A$  $D_{AB}$  $+$

$\times$  $-$  $\times$  $-$  $\times$  $-$  $R_B$

$t_0$  $t_1$  $t_{l-1}$

<u>FIG.3</u>

EP 1 724 950 A2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• FR 9916851 A

**Littérature non-brevet citée dans la description**

• **S.Z. BUDISIN.** Efficient pulse compressor for Golay complementary sequences. *Electronics Letters,* Janvier 1991, vol. 27 (3), 219-220

• **B.M. POPOVIC.** Efficient Golay Correlator. *IEEE Electronics Letters,* Janvier 1999, vol. 35 (17